# EUROPEAN PATENT APPLICATION

(11) **EP 4 815 613 A1**
(43) Date of publication of application: **30.09.2026**
(21) Application number: 24895551.0
(22) Date of filing: 14.06.2024
(51) Int. Cl.: H04W 76/10, H04L 41/16

(54) **DATA SENDING METHOD, DATA RECEIVING METHOD, COMMUNICATION DEVICE, AND STORAGE MEDIUM**

(30) Priority: 01.12.2023 CN 202311663890
(71) Applicant: ZTE CORPORATION, Shenzhen, Guangdong 518057 (CN)
(72) Inventor: XIE, Feng, Shenzhen, Guangdong 518057 (CN); WANG, Fei, Shenzhen, Guangdong 518057 (CN); LIU, Yu, Shenzhen, Guangdong 518057 (CN)
(74) Representative: Ziebig Hengelhaupt Intellectual Property Attorneys Patentanwaltskanzlei PartGmbB
(86) International application number: PCT/CN2024/099159
(87) International publication number: WO 2025/112448

(57) **Abstract**

The present application relates to the technical field of communications, and provides a data sending method, a data receiving method, a communication device, and a storage medium. The data sending method comprises: mapping to a data radio bearer(DRB) data to be transmitted; and sending said data to a second node by means of the DRB.

## Description

### CROSS-REFERENCE TO RELATED APPLICATION(S)

The present disclosure claims the priority to the Chinese patent application No. 202311663890.X, filed to the National Intellectual Property Administration of China on December 1, 2023, with the title "DATA SENDING METHOD, DATA RECEIVING METHOD, COMMUNICATION APPARATUS, AND STORAGE MEDIUM", and the entire content of the Chinese patent application is incorporated herein by reference.

### TECHNICAL FIELD

The present disclosure relates to the technical field of communications, and in particular, to a data sending method, a data receiving method, a communication apparatus, and a storage medium.

### BACKGROUND

The application of artificial intelligence (AI) technologies in the wireless communication field has improved the intelligent development of mobile communication networks and vertical industries. Meanwhile, the application of artificial intelligence technologies also imposes new capability requirements for current mobile communication networks, for example, workflow requirements involved in an AI technology, such as data collection, data preprocessing, model training, model inference, and model evaluation, etc.

The current AI technologies are generally applied in the wireless communication field in a "patch-based" and "plug-in based" manner, which makes it difficult to integrate well with mobile communication networks, resulting in low actual data transmission efficiency.

### SUMMARY

In an aspect, a data sending method is provided, applied to a first node, and including: mapping to-be-transmitted data to a data radio bearer (DRB); sending the to-be-transmitted data to a second node via the DRB.

In another aspect, another data receiving method is provided, applied to a second node, and including: receiving to-be-transmitted data sent from a first node on a DRB, where the to-be-transmitted data is mapped to the DRB by the first node.

In yet another aspect, a first node is provided, including: a processing unit and a communication unit; the processing unit is configured to map to-be-transmitted data to a data radio bearer (DRB); the communication unit is configured to send the to-be-transmitted data to a second node via the DRB.

In yet another aspect, a second node is provided, including: a processing unit and a communication unit; the communication unit is configured to receive to-be-transmitted data sent from a first node on a DRB, where the to-be-transmitted data is mapped to the DRB by the first node.

In yet another aspect, a communication apparatus is provided, including: a memory and a processor; the memory and the processor are coupled; the memory is configured to store a computer program; the processor, upon executing the computer program, implements the data sending method according to any one of the embodiments described above, or performs the data receiving method according to any one of the embodiments described above.

In yet another aspect, a computer-readable storage medium is provided, where the computer-readable storage medium has stored computer program instructions, and the computer program instructions, upon being executed by a processor, implement the data sending method according to any one of the embodiments described above, or perform the data receiving method according to any one of the embodiments described above.

In yet another aspect, a computer program product is provided, where the computer program product includes computer program instructions, and the computer program instructions, upon being executed by a processor, implement the data sending method according to any one of the embodiments described above, or perform the data receiving method according to any one of the embodiments described above.

### BRIEF DESCRIPTION OF THE DRAWINGS

In order to more clearly illustrate the technical solutions in the present disclosure, the following will briefly introduce the drawings required for use in some embodiments of the present disclosure, and obviously, the drawings in the following description are only drawings of some embodiments of the present disclosure, and for those skilled in the art, other drawings may also be obtained based on these drawings.
FIG. 1 is an architecture diagram of a communication system provided in some embodiments of the present disclosure.
FIG. 2 is a flowchart of a data sending method provided in some embodiments of the present disclosure.
FIG. 3 is a flowchart of another data sending method provided in some embodiments of the present disclosure.
FIG. 4 is a flowchart of another data sending method provided in some embodiments of the present disclosure.
FIG. 5 is a flowchart of a data receiving method provided in some embodiments of the present disclosure.
FIG. 6 is a flowchart of another data receiving method provided in some embodiments of the present disclosure.
FIG. 7 is a structure diagram of a first node provided in some embodiments of the present disclosure.
FIG. 8 is a structure diagram of a second node provided in some embodiments of the present disclosure.
FIG. 9 is a structure diagram of a communication apparatus provided in some embodiments of the present disclosure.

### DETAILED DESCRIPTION

The technical solutions in the present disclosure will be clearly and completely described below with reference to the drawings in the present disclosure, and obviously, the described embodiments are only a part of the embodiments but not all of the embodiments of the present disclosure. Based on the embodiments in the present disclosure, all other embodiments obtained by those skilled in the art without inventive effort fall within the scope of protection of the present disclosure.

It should be noted that, in the present disclosure, terms such as "exemplary/exemplarily" or "for example/such as/e.g." are used to indicate examples, illustrations or descriptions. Any embodiment or design solution described with "exemplary/exemplarily" or "for example/such as/e.g." in the present disclosure should not be construed as being more preferred or more advantageous than other embodiments or design solutions. Precisely, the use of terms such as "exemplary/exemplarily" or "for example/such as/e.g." is intended to present the related concepts in a specific manner.

Hereinafter, the terms "first" and "second" are only used for description purposes and should not be understood as indicating or implying relative importance or implicitly indicating the number of the indicated technical features. Thus, features defined with "first" and "second" may explicitly or implicitly include one or more such features.

In the description of the present disclosure, unless otherwise specified, "/" means "or", for example, A/B may represent A or B. Herein, "and/or" only describes an association relationship between associated objects, indicating that three relationships may exist, for example, A and/or B may represent: A exists alone, A and B exist simultaneously, and B exists alone. In addition, "at least one" means one or more, and "multiple/plurality of" means two or more.

In the following, terms involved in the embodiments of the present disclosure are explained to facilitate the reader's understanding.

### (1) Quality of service rule (QoS rule)

A QoS rule is used to indicate a terminal device (user equipment, UE) to map an uplink user plane data packet to a QoS flow. Afterwards, the UE (a service data adaptation protocol (SDAP) layer) maps the uplink QoS flow to a data radio bearer (DRB).

An access and mobility management function network element (access and mobility management function, AMF) sends a QoS rules information element (IE) to the UE through a protocol data unit (PDU) session establishment/modification procedure. modification) procedure (procedure) to send the QoS rules information element (IE) to the UE.

The QoS rules information element includes multiple QoS rules, and each QoS rule is associated with one or more packet filter sets. A packet filter set is generally expressed in the form of a filter list (packet filter list) in a QoS rule.

Exemplarily, the QoS rules information element is shown in Table 1 below.

**Table 1 QoS rules information element**

| 8 | 7 | 6 | 5 | 4 | 3 | 2 | 1 | Bit |
|---|---|---|---|---|---|---|---|---|
| QoS rules information element identifier (IEI) | | | | | | | | octet 1 |
| Length of QoS rules information element (length of QoS rules IE) | | | | | | | | octet 2 |
| | | | | | | | | octet 3 |
| QoS rule 1 | | | | | | | | octet 4 |
| | | | | | | | | ... |
| | | | | | | | | octet u |
| QoS rule 2 | | | | | | | | octet u+1 |
| | | | | | | | | ... |
| | | | | | | | | octet v |
| ... | | | | | | | | octet v+1 |
| | | | | | | | | ... |
| | | | | | | | | octet w |
| QoS rule n | | | | | | | | octet w+1 |
| | | | | | | | | ... |
| | | | | | | | | octet x |

The QoS rules IEI is a unique identifier for identifying a QoS rules information element, and is generally represented by 1 octet. The AMF and the UE may identify and reference the QoS rules information element by the QoS rules IEI. The length of QoS rules IE is used to indicate a size of the QoS rules information element. QoS rule 1 to QoS rule n are used to represent multiple QoS rules included in the QoS rules information element.

Exemplarily, taking QoS rule 1 in Table 1 as an example, the content of the QoS rule is shown in Table 2 below.

**Table 2 QoS rule**

| 8 | 7 | 6 | 5 | 4 | 3 | 2 | 1 | Bit |
|---|---|---|---|---|---|---|---|---|
| QoS rule identifier | | | | | | | | octet 4 |
| QoS rule length | | | | | | | | octet 5 |
| | | | | | | | | octet 6 |
| Rule operation code | | | DQR bit | Number of packet filters | | | | octet 7 |
| Packet filter list | | | | | | | | octet 8 |
| | | | | | | | | ... |
| | | | | | | | | octet u-2 |
| QoS rule precedence | | | | | | | | octet u-1 |
| Spare | Segregation | QoS flow identifier (QFI) | | | | | | octet u |

The QoS rule identifier is used to identify a QoS rule, the QoS rule length is used to indicate the size of the QoS rule, and the rule operation code is used to define an operation instruction, for example, creating a new QoS rule. The DQR bit is used to indicate whether the QoS rule is a default QoS rule. The number of packet filters is used to identify the number of packet filters in the QoS rule. The packet filter list is used to carry packet filter information. The QoS rule precedence is used to define the priority of the QoS rule, and the QoS flow identifier is used to identify a QoS flow.

### (2) Packet filter set

Currently, there are two types of packet filter sets: one is an internet protocol (IP) packet filter set, and the other is an Ethernet (ethernet) packet filter set. A packet filter set is generally used to map a data flow to a QoS flow according to a configured data mapping rule, so that the data is transmitted according to the corresponding QoS rule.

A packet filter set includes multiple packet filters. A packet filter is used to define a specific data filtering rule.

Currently, the packet filter includes the following fields.

Packet filter direction (2 bits): it is used to define the direction of the packet filter, where the direction type includes uplink, downlink, or uplink and downlink.

Packet filter identifier (4 bits): it is used to identify each packet filter.

The length of the packet filter contents (1 octet): it is used to define the length of the packet filter contents.

The packet filter contents itself (a variable number of octets): it is used to define specific content information of the packet filter.

There is a certain corresponding relationship between the identifier and the type of the packet filter, and each type corresponds to a different packet filter content. For example, the type of the packet filter is an IPv4 remote address type packet filter, the content of the packet filter is an IPv4 address and address mask information. The following is a partial corresponding relationship between the identifier and the type:
0 0 0 0 0 0 0 1 Match-all type;
0 0 0 1 0 0 0 0 IPv4 remote address type;
0 0 0 1 0 0 0 1 IPv4 local address type;
0 0 1 0 0 0 0 1 IPv6 remote address/prefix length type;
0 0 1 0 0 0 1 1 IPv6 local address/prefix length type;
0 0 1 1 0 0 0 0 Protocol identifier/Next header type;
0 1 0 0 0 0 0 0 Single local port type;
0 1 0 0 0 0 0 1 Local port range type;
0 1 0 1 0 0 0 0 Single remote port type;
0 1 0 1 0 0 0 1 Remote port range type;
0 1 1 0 0 0 0 0 Security parameter index type;
0 1 1 1 0 0 0 0 Type of service/Traffic class type;
1 0 0 0 0 0 0 0 Flow label type;
1 0 0 0 0 0 0 1 Destination MAC address type;
1 0 0 0 0 0 1 0 Source MAC address type;
1 0 0 0 0 0 1 1 802.1Q customer tag (C-TAG) virtual local area network identifier (VID) type;
1 0 0 0 0 1 0 0 802.1Q service tag (S-TAG) VID type;
1 0 0 0 0 1 0 1 802.1Q C-TAG priority code point/drop eligible indicator (PCP/DEI) type;
1 0 0 0 0 1 1 0 802.1Q S-TAG PCP/DEI type;
1 0 0 0 0 1 1 1 Ethertype type.

Exemplarily, with reference to the packet filter list in Table 2 above, when the rule operation code indicates "creating a new QoS rule" or "modifying an existing QoS rule and add a packet filter" or "modifying an existing QoS rule and replace all packet filters", the content of the packet filter set is shown in Table 3 below.

**Table 3 Packet filter list**

| 8 | 7 | 6 | 5 | 4 | 3 | 2 | 1 | Bit |
|---|---|---|---|---|---|---|---|---|
| Spare | | Packet filter direction 1 | | Packet filter identifier 1 | | | | octet 8 |
| Packet filter content length 1 | | | | | | | | octet 9 |
| Packet filter content 1 | | | | | | | | octet 10 |
| | | | | | | | | ... |
| | | | | | | | | octet m |
| Spare | | Packet filter direction 2 | | Packet filter identifier 2 | | | | octet m+1 |
| Packet filter content length 2 | | | | | | | | octet m+2 |
| Packet filter content 2 | | | | | | | | octet m+3 |
| | | | | | | | | ... |
| | | | | | | | | octet n |
| ...... | | | | | | | | octet n+1 |
| | | | | | | | | |
| | | | | | | | | octet u-5 |
| Spare | | Packet filter direction N | | Packet filter identifier N | | | | octet u-4 |
| Packet filter content length N | | | | | | | | octet u-3 |
| Packet filter content N | | | | | | | | octet u-2 |

The packet filter list includes packet filter 1 to packet filter N, each packet filter includes fields such as direction, identifier, length, and content.

### (3) Packet detection rule (PDR)

PDR is used to define detection and classification rules of data packets. The PDR also includes the packet filter set.

A session management function network element (session management function, SMF) sends a PDR to a user plane function network element (user plane function, UPF) via an N4 session management procedure (e.g., an N4 session establishment procedure or an N4 session modification procedure) of an N4 air interface.

The UPF maps a downlink data packet to a QoS flow by the PDR. Afterwards, a 5G radio access network (next generation radio access network, NG-RAN) maps the downlink QoS flow to a DRB.

Exemplarily, the content of the PDR includes:
1. uplink or downlink packet filter of a service flow (service data flow, SDF) template;
2. PDR precedence;
3. QoS enforcement rule, for example, an SDF maximum bit rate, a guaranteed flow bit rate (GFBR), a guaranteed bit rate (GBR), a maximum bit rate of the QoS flow;
4. forwarding behavior rule;
5. reflected QoS indication.

The application of AI technologies in the wireless communication field has improved the intelligent development of mobile communication networks and vertical industries. Meanwhile, the application of artificial intelligence technologies also imposes new capability requirements for current mobile communication networks, for example, workflow requirements involved in an AI technology, such as data collection, data preprocessing, model training, model inference, and model evaluation, etc.

Facing the future vision of ubiquitous intelligence, i.e., the scenario of integration application of technologies such as the Internet, Internet of Things, big data, and artificial intelligence, etc., future wireless communication networks need to have native AI capabilities, to achieve a deep integration design of computing power, data, algorithms, and connections required for AI services with network functions, protocols, and procedures.

The current AI technologies are generally applied in the wireless communication field in a "patch-based" and "plug-in based" manner, i.e., the AI-related processing is concentrated on a cloud server. However, for scenarios in the wireless communication field, such as air interface related channel state information (CSI) feedback optimization, beam management, and positioning, etc., the above manner requires uploading large amounts of data to the cloud server by the UE or RAN, which occupies large amounts of communication resources and causes large interaction latency, failing to meet the real-time requirements of the above scenarios.

In summary, current solutions are difficult to integrate better with mobile communication networks, resulting in low actual data transmission efficiency.

Future-oriented wireless network architectures need to support native AI, i.e., a complete operating environment of the full lifecycle of the AI technology is provided within the network architecture, and after supporting the native AI, the generation source for data will also change, and the generation of data will include network devices such as UE and RAN, in addition to an application/server. Therefore, network devices such as UE and RAN also need to have functions such as data collection, model training, and model storage, and meanwhile, also need a suitable data transmission solution.

In view of this, the embodiment of the present disclosure provides a data sending method, where a first node maps to-be-transmitted data to a DRB, and sends the to-be-transmitted data to a second node via the DRB. In the prior art, data of a terminal generally needs to be transmitted to a target device via network links such as an access network, a carrier network, a core network, and a backbone network, etc., and in this process, the data transmission between the terminal and other network devices such as the access network device is generally indicated and managed by core network elements (e.g., AMF, SMF, UPF and other network elements).

However, for air interface related intelligent or sensing application scenarios, such as CSI feedback optimization, beam management, and positioning, etc., they mainly involve an interaction scenario between a terminal and a base station, and in the prior art, it needs the terminal or base station to upload relevant data to the network side for processing, which occupies large amounts of communication resources, and has problems of high interaction latency and being difficult to meet the timeliness requirements of some scenarios. By contrast, most processes of the data sending method provided in the present disclosure involve only a first node and a second node, and do not require, or only require a small part of, indication and management of the data transmission through other network devices, thereby saving signaling overhead while also ensuring the timeliness, thus improving the data transmission efficiency.

The implementations of the embodiments of the present disclosure will be described in detail below with reference to the drawings of the specification.

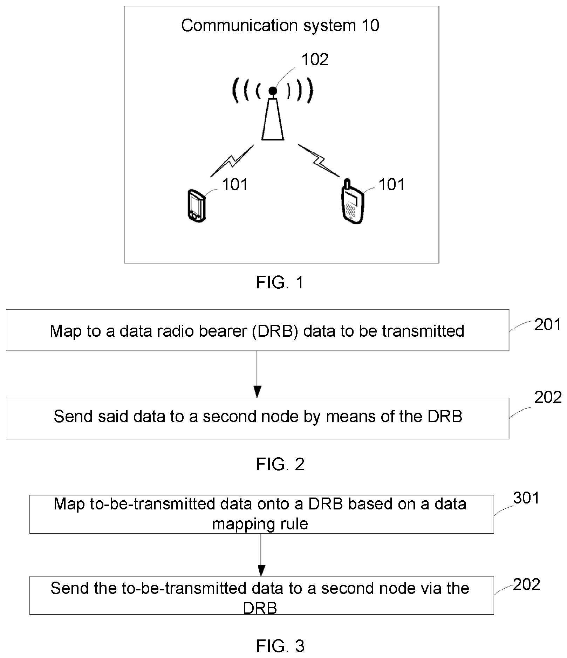

FIG. 1 is an architecture diagram of a communication system 10 provided in the embodiments of the present disclosure. As shown in FIG. 1, the communication system 10 includes: a terminal 101 and a base station 102.

The terminal 101 and the base station 102 are connected via a communication link. The communication link may be a wired communication link or a wireless communication link, which is not limited in the present disclosure.

The technical solution of the embodiments of the present disclosure may be applied to various communication systems 10, such as: code division multiple access (CDMA), time division multiple access (TDMA), frequency division multiple access (FDMA), orthogonal frequency-division multiple access (OFDMA), single carrier frequency-division multiple access (single carrier FDMA, SC-FDMA) and other systems. The term "system" may be interchanged with "network". The CDMA system may implement radio technologies such as universal terrestrial radio access (UTRA) and CDMA2000, etc. The UTRA may include a wideband CDMA (WCDMA) technology and other CDMA variant technologies. CDMA2000 may cover the interim standard (IS) 2000 (IS-2000), IS-95, and IS-856 standards. The TDMA system may implement radio technologies such as a global system for mobile communication (GSM), etc. The OFDMA system may implement radio technologies such as evolved universal terrestrial radio access (evolved UTRA, E-UTRA), ultra mobile broadband (UMB), IEEE 802.11 (Wi-Fi), IEEE 802.16 (WiMAX), IEEE 802.20, Flash OFDMA, etc. The UTRA and E-UTRA are UMTS and an evolved version of UMTS. Long term evolution (LTE) and various versions evolved based on LTE in 3GPP are new versions of UMTS using E-UTRA. The communication system 10 may also be a 5G communication system, new radio (NR), and a 6G communication system. In addition, the communication system 10 may also be applicable to future-oriented communication technologies, all of which are applicable to the technical solutions provided in the embodiments of the present disclosure.

The terminal 101 is a device with a wireless communication function, and may be deployed on land, including indoor or outdoor, handheld or vehicle-mounted. It may also be deployed on a water surface (e.g., a ship, etc.). It may also be deployed in the air (e.g., an airplane, a balloon, a satellite, etc.). The terminal 101 is also referred to as user equipment (UE), a mobile station (MS), a mobile terminal (MT), and a terminal device, etc., and is a device that provides voice and/or data connectivity to users. For example, The terminal 101 includes a handheld device, a vehicle-mounted device with a wireless connection function, etc. Currently, the terminal 101 may be: a mobile phone, a tablet computer, a laptop computer, a palm computer, a mobile internet device (MID), a wearable device (e.g., a smart watch, a smart bracelet, a pedometer, etc.), a vehicle-mounted device (e.g., a car, a bicycle, an electric vehicle, an airplane, a ship, a train, a high-speed train, etc.), a virtual reality (VR) device, an augmented reality (AR) device, a wireless terminal in industrial control, a smart home device (e.g., a refrigerator, a television, an air conditioner, an electric meter, etc.), a smart robot, a workshop device, a wireless terminal in self driving, a wireless terminal in remote medical surgery, a wireless terminal in smart grid, a wireless terminal in transportation safety, a wireless terminal in smart city, or a wireless terminal in smart home, a flying device (e.g., a smart robot, a hot air balloon, a drone, an airplane), etc. In a possible application scenario of the present disclosure, the terminal is a terminal that often works on the ground, for example, a vehicle-mounted device. In the present disclosure, for ease of description, a chip deployed in the above device, such as a system-on-a-chip (SOC), a baseband chip, etc., or another chip with a communication function may also be referred to as a terminal.

The terminal 101 may be a vehicle with a corresponding communication function, a vehicle-mounted communication apparatus, or another embedded communication apparatus, or may be a user handheld communication device, including a mobile phone, a tablet computer, etc.

As an example, in the embodiments of the present disclosure, the terminal 101 may also be a wearable device. The wearable device may also be referred to as a wearable smart device, which is a general term for devices that can be worn and are intelligently designed and developed from daily wear by applying the wearable technology, such as glasses, gloves, a watch, clothing, and shoes, etc. The wearable device is a portable device that is directly worn on the body or integrated into a user's clothes or accessories. The wearable device is not only a hardware device but also implements powerful functions through software support, data interaction, and cloud interaction. The broadly defined wearable smart device includes: for example, smart watchs or smart glasses, etc., that have full functions and large sizes and may implement complete or partial functions without relying on a smartphone, and for example, various types of smart bracelets and smart jewelry for vital sign monitoring, etc., that focus on a certain type of application function and need to be used and matched with other devices such as a smartphone.

The base station 102 is a device located on the access network side of the above communication system and having a wireless transceiver function, or a chip or a chip system that may be set in the device. The base station 102 includes but is not limited to: an access point (AP) in a WiFi system, such as a home gateway, a router, a server, a switch, a network bridge, etc., an evolved NodeB (eNB), a radio network controller (RNC), a NodeB (NB), a base station controller (BSC), a base transceiver station (BTS), a home base station (e.g., a home evolved NodeB, or home NodeB, HNB), a base band unit (BBU), a wireless relay node, a wireless backhaul node, a transmission point (transmission and reception point, TRP, or transmission point, TP), etc., and may also be a 5G base station, such as a gNB in a new radio (NR) system, or a transmission point (TRP or TP), a antenna panel or a group (including multiple antenna panels) of antenna panels of a base station in a 5G system, or may also be a network node constituting a gNB or a transmission point, such as a base band unit (BBU), or a distributed unit (DU), a road side unit (RSU) with a base station function, or a 5G access network (NG radio access network, NG-Ran) device, etc. The base station 102 also includes base stations in different networking modes, such as a master base station (master evolved NodeB (MeNB)), a secondary base station (secondary eNB (SeNB) or secondary gNB (SgNB)). The base station 102 also includes different types, such as a ground base station, an air base station, and a satellite base station.

The technical solutions provided in the present disclosure are applied during a data transmission process between a terminal 101 and a base station 102, particularly in a scenario where the data transmission is performed for the generated to-be-transmitted data after the terminal 101 and the base station 102 themselves generate the to-be-transmitted data (for example, data used for an artificial intelligence model, data generated by an artificial intelligence model, sensing data, etc.).

Exemplarily, the data transmission scenario may include the following cases.

Case 1: The terminal 101 is used to send a first data request message to the base station 102. Correspondingly, the base station 102 is used to receive the first data request message from the terminal 101.

The first data request message is used to request the base station 102 to send to-be-transmitted data.

Exemplarily, the to-be-transmitted data is local data generated by the base station 102 itself, such as a training model locally generated by the base station 102, an intermediate result of inference, and the like.

The base station 102 is used to send the to-be-transmitted data to the terminal 101. Correspondingly, the terminal 101 is used to receive the to-be-transmitted data from the base station 102.

Case 2: The terminal 101 is used to send a second data request message to the base station 102. Correspondingly, the base station 102 is used to receive the second data request message from the terminal 101.

The second data request message is used to request the base station 102 to authorize the terminal 101 to send to-be-transmitted data to the base station 102. Similarly, the to-be-transmitted data is local data generated by the base station 102 itself, for example, a training model locally generated by the terminal 101, an intermediate result of inference, and the like.

The base station 102 is further used to confirm whether to authorize the terminal 101 to send the to-be-transmitted data.

The terminal 101 is further used to send the to-be-transmitted data to the base station 102. Correspondingly, the base station 102 is used to receive the to-be-transmitted data from the terminal 101.

Case 3: The base station 102 is used to send a third data request message to the terminal 101. Correspondingly, the terminal 101 is used to receive the third data request message from the base station 102.

The third data request message is used to request the terminal 101 to send to-be-transmitted data.

The terminal 101 is used to send the to-be-transmitted data to the base station 102. Correspondingly, the base station 102 is used to receive the to-be-transmitted data from the terminal 101.

Case 4: The base station 102 is used to send a fourth data request message to the terminal 101. Correspondingly, the terminal 101 is used to receive the fourth data request message from the base station 102.

The fourth data request message is used to request the terminal 101 to authorize the base station 102 to send to-be-transmitted data to the terminal 101.

The terminal 101 is further used to confirm whether to authorize the base station 102 to send the to-be-transmitted data.

The base station 102 is used to send the to-be-transmitted data to the terminal 101. Correspondingly, the terminal 101 is used to receive the to-be-transmitted data from the base station 102.

Currently, the terminal 101 and the base station 102 generally perform the data transmission by establishing a data radio bearer (DRB). Therefore, the terminal 101 and the base station 102 need to have certain computing power, storage, and data processing capabilities.

The terminal 101 and the base station 102 need to implement mapping from to-be-transmitted data file/flow to the QoS flow to DRB, or mapping from to-be-transmitted data file/flow to DRB, so as to implement the transmission of to-be-transmitted data between the terminal 101 and the base station 102.

It should be noted that the various embodiments of the present disclosure may be referenced or cross-referenced with each other, for example, the same or similar steps, method embodiments, system embodiments, and apparatus embodiments may be cross-referenced without any limitation.

FIG. 2 is a flowchart of a data sending method provided in the embodiments of the present disclosure. As shown in FIG. 2, the method includes the following steps.

In step 201: a first node maps to-be-transmitted data to a data radio bearer (DRB).

The first node may be an access network related node device, such as a base station or a terminal. The to-be-transmitted data is local data generated by the first node.

Currently, applying the AI technology in the field of wireless communication is a development trend of future mobile communication networks. The application of the AI technology imposes new capability requirements on current mobile communication networks, such as workflow requirements involved in the AI technology, such as data collection, data preprocessing, model training, model inference, and model evaluation, etc.

For the above technical scenarios, the present disclosure provides a data sending method to implement the data transmission of relevant data generated by the AI technology between the terminal and the base station.

Exemplarily, the to-be-transmitted data may include at least one of: data used for an artificial intelligence model, data generated by an artificial intelligence model, and sensing data.

In step 202: the first node sends the to-be-transmitted data to a second node via the DRB.

The second node may be an access network related node device, such as a base station or a terminal.

In a possible implementation, the first node is a base station, and the second node is a terminal. Alternatively, the first node is a terminal and the second node is a base station.

When the first node is a base station and the second node is a terminal, the base station may, after generating to-be-transmitted data by itself, map the to-be-transmitted data to a DRB, and send the to-be-transmitted data to the terminal via the DRB.

When the first node is a terminal and the second node is a base station, the terminal may, after generating to-be-transmitted data by itself, map the to-be-transmitted data to a DRB by a quality of service rule (QoS Rule) indicated by the base station, and send the to-be-transmitted data to the base station via the DRB.

From the above two scenarios, it can be seen that the to-be-transmitted data mainly involves the interaction between the two node devices, i.e., the terminal and the base station, without other node devices participating in the above data transmission process. In the prior art, during a transmission, data passes through network links such as an access network, a carrier network, a core network, and a backbone network, and core network related network elements manage and configure the data transmission process.

Obviously, for the above scenarios involved in the embodiments of the present disclosure, the solution of transmitting data to a core network element such as a UPF for data mapping will cause additional resource overhead and increase transmission delay.

In summary, the embodiments of the present disclosure provide a data sending method, where a first node maps to-be-transmitted data to a DRB, and sends the to-be-transmitted data to a second node via the DRB. In the prior art, the data of the terminal generally needs to be transmitted to a target device via network links such as an access network, a carrier network, a core network, and a backbone network, and in this process, the data transmission between the terminal and other network devices such as an access network device is generally indicated and managed by core network elements (e.g., AMF, SMF, UPF and other network elements).

However, for air interface related intelligent or sensing application scenarios, such as CSI feedback optimization, beam management, and positioning, they mainly involve the interaction between the terminal and the base station, and in the prior art, it needs the terminal or base station to upload relevant data to the network side for processing, which occupies large amounts of communication resources, and has problems of high interaction latency and being difficult to meet the timeliness requirements of some scenarios. By contrast, most processes of the data sending method provided in the present disclosure involve only a first node and a second node, and other network devices do not need to participate or only provide an indication for the data transmission, thereby saving signaling overhead while ensuring timeliness, thus improving the data transmission efficiency.

In the following, the process of data mapping by the first node is introduced.

As a possible embodiment of the present disclosure, in conjunction with FIG. 2, as shown in FIG. 3, the above step 201 may be implemented by the following step 301.

In step 301: the first node maps to-be-transmitted data onto a DRB based on a data mapping rule.

The data mapping rule is used to filter and group data.

In a possible implementation, the data mapping rule includes at least one of:
an identifier of the data mapping rule;
a length of the data mapping rule;
indication information for indicating whether it is a default data mapping rule;
a number of packet filters;
a precedence value of the data mapping rule;
an identifier of a QoS flow associated with the data mapping rule, or an identifier of a DRB associated with the data mapping rule;
a packet filter list.

Exemplarily, the identifier of the data mapping rule may be a QoS rule ID field, used to identify the data mapping rule.

The length of the data mapping rule may be a length of QoS rule field, used to represent a content length of the data mapping rule.

The indication information for indicating whether it is a default data mapping rule may be a DQR bit field. For example, when the DQR bit value is 1, it indicates that the corresponding data mapping rule is a default data mapping rule. When the DQR bit value is 0, it indicates that the corresponding data mapping rule is not a default data mapping rule.

The number of packet filters may be a number of packet filters field, used to represent a number of packet filters in the data mapping rule.

The precedence value of the data mapping rule may be a QoS rule precedence field, used to represent a relative precedence of the data mapping rule, i.e., a matching order of data with multiple data mapping rules.

The identifier of the QoS flow associated with the data mapping rule may be a QoS flow identifier field (QFI), used to identify a QoS flow. The identifier of the DRB associated with the data mapping rule may be a DRB identifier, used to identify a DRB. Multiple data mapping rules may be associated with the same QFI or the same DRB identifier.

The packet filter list may be a packet filter list field, used to carry packet filter information.

In a possible implementation, the packet filter list includes at least one of:
a direction of a packet filter;
an identifier of a packet filter;
a content of the packet filter.

The direction of the packet filter may be a packet filter direction field, used to represent a data flow direction mapped by the packet filter, including an uplink direction, a downlink direction, or uplink and downlink directions. The identifier of the packet filter may be a packet filter identifier field, used to identify the packet filter. The content of the packet filter is used to carry specific condition information of data packet filtering.

The packet filters in the packet filter list are packet filters in a data packet filter set. Current packet filter sets include an IP packet filter set and an Ethernet packet filter set. However, the above two types of packet filter sets are mainly for the end-to-end data transmission and are not applicable for the local data between the terminal and the base station involved in the present disclosure.

In this regard, the embodiments of the present disclosure provide an RAN-based packet filter set: a local data packet filter set (local data filter set) is used to implement grouping and filtering of data generated inside the base station or the terminal.

The local data packet filter set includes one or more packet filters, used to map to-be-transmitted data of the first node or the second node to a QoS flow or to a DRB.

In a possible implementation, the content of the packet filter includes at least one of:
a source IP address type;
a destination IP address type;
a source port number;
a destination port number;
a source assembly identifier;
a destination assembly identifier;
a service type.

The source IP address type may be a type of source IP address field, used to match a source IP address of a data flow. The destination IP address type may be a type of destination IP address field, used to match a destination IP address of the data flow.

The source port number may be a source port number field, used to match a source port number of the data flow. The destination port number may be a destination port number field, used to match a destination port number of the data flow.

The source assembly identifier may be a source assembly ID field, used to match a source assembly of the data flow. The destination assembly identifier may be a destination assembly ID field, used to match a destination assembly of the data flow. In the embodiments of the present disclosure, the to-be-transmitted data used for the transmission between the terminal and the base station may be matched by the source component and the destination component.

The service type may be a type of service field, used to match a service corresponding to the data flow. Exemplarily, the service type may include services such as AI model training, AI model inference, and sensing, etc.

In this way, the first node in the present disclosure may, based on the data mapping rule, map data of different source/destination addresses, source/destination ports, source/destination assemblies or service types, to a corresponding QoS flow or DRB, so as to implement precedence guarantee for different sources (source addresses, source ports, source assemblies, different destinations (destination addresses, destination ports, destination assemblies), and different service types.

Currently, for end-to-end downlink data, a UPF generally maps downlink user data to a QoS flow. In this case, an SMF delivers a QoS configuration to the base station, and the base station maps the QoS flow to a DRB according to the QoS configuration.

For end-to-end uplink data, the SMF delivers QoS to the terminal, and the terminal maps uplink user data to a QoS flow according to the data mapping rule. Afterward, the terminal (the SDAP layer) maps the QoS flow to a DRB.

The mapping from the data flow to the QoS flow belongs to an operation at a non-access stratum (NAS) level, and the mapping from the QoS flow to the DRB belongs to an operation at an access stratum (AS) level.

For the to-be-transmitted data in the embodiments of the present disclosure, it mainly involves the data transmission between the base station and the terminal, and therefore, in the present disclosure, the first node may map the to-be-transmitted data to a QoS flow and then map the QoS flow to a DRB, or may directly map the to-be-transmitted data to a DRB.

In a possible implementation, the first node directly maps the to-be-transmitted data to a DRB based on a first data mapping rule.

Exemplarily, the first data mapping rule may include an identifier of a DRB associated with the first data mapping rule.

In another possible implementation, the first node maps the to-be-transmitted data to a quality of service flow (QoS flow) based on a second data mapping rule. Afterward, the first node maps the QoS flow to a DRB.

Exemplarily, the second data mapping rule may include an identifier of a QoS flow associated with the second data mapping rule.

A process that the first node sends the data mapping rule to the second node, is introduced below.

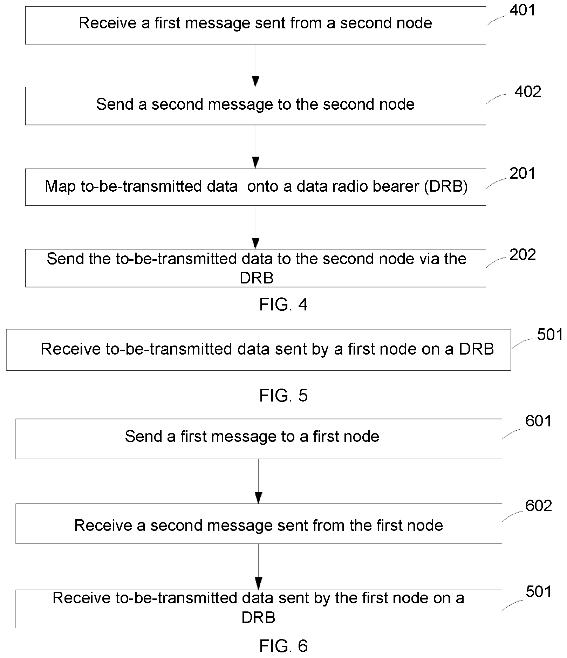

As a possible embodiment of the present disclosure, with reference to FIG. 2, as shown in FIG. 4, the method further includes the following step 401 to step 402.

In step 401: the first node receives a first message sent from the second node.

The first message is used to request to establish a data transmission connection.

It can be seen from the above solution that, the first node, after generating the to-be-transmitted data, may map the to-be-transmitted data to a DRB for the data transmission by a data mapping rule. Similarly, the second node, after generating to-be-transmitted data, also needs to perform mapping through a data mapping rule. Therefore, the second node may acquire the data mapping rule from the first node by means of a message request.

It should be noted that, for a process that the second node sends the to-be-transmitted data to the first node, reference may be made to the related technical solution that the first node sends the to-be-transmitted data to the second node in the embodiments of the present disclosure, which is not repeated in the present disclosure.

In step 402: the first node sends a second message to the second node.

The second message is used to respond to the first message. After receiving the first message, the first node may send the second message to the second node, to indicate the second node to establish a data transmission connection.

It should be noted that the present disclosure does not limit the execution order of step 401 to step 402 and the above step 201, as long as the first node and the second node establish a data transmission connection before transmitting the to-be-transmitted data. Therefore, step 401 to step 402 may be performed before the above step 201 or performed after step 201, and FIG. 4 illustrates the data sending method provided in the present disclosure only by taking an example where step 401 to step 402 are performed before step 201.

In a possible implementation, the second message includes a data mapping rule.

Exemplarily, the second message is a radio resource control (RRC) message or a medium access control element (MAC control element, MAC CE).

Currently, in the prior art, an AMF sends a data mapping rule to the terminal through a PDU session establishment/modification procedure. The data mapping rule is carried on an NAS message.

Since the present disclosure mainly involves the data transmission between the first node and the second node, the second message may be an AS message such as an RRC message or an MAC CE, etc. In this way, in the present disclosure, the first node may directly send the data mapping rule to the second node, without other network element devices (e.g., core network element AMF, etc.). Meanwhile, the message at the access stratum level such as the RRC message and MAC CE, has effects of lower signaling latency and smaller signaling overhead, compared with the message at the non-access stratum level. Therefore, the above solutions of the present disclosure can further reduce additional communication resource consumption and ensure the timeliness of the data transmission.

For an RRC message, the second message in the present disclosure may be in a new data transmission message format, or may also be based on a message format of the current NAS message.

As an example, for an RRC message in a new data transmission message format, the abstract syntax notation (ASN.1) coding format of the data mapping rule in the second message in the present disclosure is as follows:

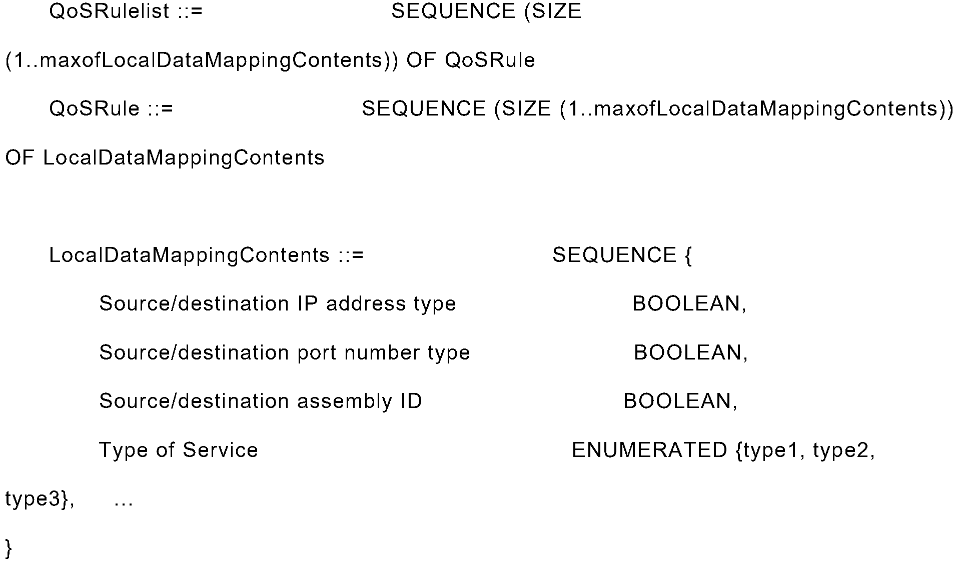

The QoSRulelist field is used to represent a QoS rule list, represented in a sequence form. The QoSRule field is used to represent a QoS rule, represented in a sequence form.

The LocalDataMappingContents field is used to represent the content of the data mapping rule, which includes fields such as source/destination IP address type, source/destination port number type, source/destination assembly identifier, and service type, etc.

As another example, for carrying the encapsulated NAS message by the current RRC message, the coding format of the data mapping rule in the second message in the present disclosure is as shown in Table 4 below:

**Table 4 Data mapping rule**

| 8 | 7 | 6 | 5 | 4 | 3 | 2 | 1 | Bit |
|---|---|---|---|---|---|---|---|---|
| QoS rule identifier | | | | | | | | octet 4 |
| QoS rule length | | | | | octet 5 | | | |
| | | | | | octet 6 | | | |
| Rule operation code | | | DQR bit | Number of packet filters | octet 7 | | | |
| Packet filter list | | | | | octet 8 | | | |
| | | | | | ... | | | |
| | | | | | octet u-2 | | | |
| QoS rule precedence | | | | | octet u-1 | | | |
| Spare | Segregation | QFI/DRB identifier | | | octet u | | | |

It should be noted that, when the data mapping rule is the first data mapping rule (i.e., a data mapping rule that directly maps the to-be-transmitted data to a DRB), the DRB identifier field is selected for the QFI/DRB identifier in Table 4, to associate with the corresponding DRB.

When the data mapping rule is the second data mapping rule (i.e., a data mapping rule that maps the to-be-transmitted data to a QoS flow), the QFI field is selected for the QFI/DRB identifier in Table 4, to associate with a corresponding QoS flow.

As another example, for the second message in the MAC CE message format, the coding format of the data mapping rule in the present disclosure is as shown in Table 5 below:

**Table 5 Data mapping rule**

| | |
|---|---|
| QoS rule identifier 1 | |
| QoS rule length 1 | |
| Number of packet filters | |
| Packet filter direction 1 | Packet filter identifier 1 |
| Packet filter content length 1 | |
| Packet filter content 1 | |
| Packet filter direction 2 | Packet filter identifier 2 |
| Packet filter content length 2 | |
| Packet filter content 2 | |
| ...... | |
| Packet filter direction n | Packet filter identifier n |
| Packet filter content length n | |
| Packet filter content n | |
| QoS rule precedence | |
| QFI/RB identifier | |
| QoS rule identifier 2 | |
| QoS rule length 2 | |
| Number of packet filters | |
| Packet filter direction 1 | Packet filter identifier 1 |
| Packet filter content length 1 | |
| Packet filter content 1 | |
| Packet filter direction 2 | Packet filter identifier 2 |
| Packet filter content length 2 | |
| Packet filter content 2 | |
| ...... | |
| Packet filter direction m | Packet filter identifier m |
| Packet filter content length m | |
| Packet filter content m | |
| QoS rule precedence | |
| QFI/RB identifier | |
| ...... | |
| QoS rule identifier N | |
| QoS rule length N | |
| Number of packet filters | |
| Packet filter direction 1 | Packet filter identifier 1 |
| Packet filter content length 1 | |
| Packet filter content 1 | |
| Packet filter direction 2 | Packet filter identifier 2 |
| Packet filter content length 2 | |
| Packet filter content 2 | |
| ...... | |
| Packet filter direction M | Packet filter identifier M |
| Packet filter content length M | |
| Packet filter content M | |
| QoS rule precedence | |
| QFI/RB identifier | |

It should be noted that, when the data mapping rule is the first data mapping rule (i.e., a data mapping rule that directly maps the to-be-transmitted data to a DRB), the RB identifier field is selected for the QFI/RB identifier in Table 5, to associate with a corresponding DRB.

When the data mapping rule is the second data mapping rule (i.e., a data mapping rule that maps the to-be-transmitted data to a QoS flow), the QFI field is selected for the QFI/RB identifier in Table 5, to associate with a corresponding QoS flow.

FIG. 5 is a flowchart of a data receiving method provided in the embodiments of the present disclosure. As shown in FIG. 5, the method includes the following steps.

In step 501: a second node receives to-be-transmitted data sent from a first node on a DRB.

The to-be-transmitted data is mapped to the DRB by the first node.

In a possible implementation, the first node is a base station, and the second node is a terminal. Alternatively, the first node is a terminal and the second node is a base station.

Based on the above technical solution, the embodiments of the present disclosure provide a data receiving method, where the second node receives to-be-transmitted data sent from the first node on a DRB. The to-be-transmitted data is mapped to the DRB by the first node. In the prior art, data of a terminal generally needs to be transmitted to a target device via network links such as an access network, a carrier network, a core network, and a backbone network, etc., and in this process, the data transmission between the terminal and other network devices such as the access network device is generally indicated and managed by core network elements (e.g., AMF, SMF, UPF and other network elements).

However, for air interface related intelligent or sensing application scenarios, such as CSI feedback optimization, beam management, and positioning, etc., they mainly involve an interaction scenario between a terminal and a base station, and in the prior art, it needs the terminal or base station to upload relevant data to the network side for processing, which occupies large amounts of communication resources, and has problems of high interaction latency and being difficult to meet the timeliness requirements of some scenarios. By contrast, the data sending method provided in the present disclosure only involves the first node and the second node, and other network devices do not need to participate, or only provide an indication for the data transmission, thereby saving signaling overhead while also ensuring the timeliness, thus improving the data transmission efficiency.

The following describes a process that the second node receives the data mapping rule sent from the second node.

As a possible embodiment of the present disclosure, in conjunction with FIG. 5, as shown in FIG. 6, the method further includes the following step 601 to step 602.

In step 601: the second node sends a first message to the first node.

The first message is used to request to establish a data transmission connection.

For details, reference may be made to the related description in step 401 above, which will not be repeated here.

In step 602: the second node receives a second message sent from the first node.

The second message is used to respond to the first message.

In a possible implementation, the second message includes a data mapping rule.

The related solution of the data mapping rule may refer to the above related description, which will not be repeated here.

Exemplarily, the second message is a radio resource control (RRC) message or a medium access control element (MAC control element, MAC CE).

Currently, in the prior art, an AMF sends a data mapping rule to the terminal through a PDU session establishment/modification procedure. The data mapping rule is carried on an NAS message.

Since the present disclosure mainly involves the data transmission between the first node and the second node, the second message may be an AS message such as an RRC message or an MAC CE, etc. In this way, in the present disclosure, the first node may directly send the data mapping rule to the second node, without other network element devices (e.g., core network element AMF, etc.). Meanwhile, the message at the access stratum level such as the RRC message and MAC CE, has effects of lower signaling latency and smaller signaling overhead, compared with the message at the non-access stratum level. Therefore, the above solutions of the present disclosure can further reduce additional communication resource consumption and ensure the timeliness of the data transmission.

It can be understood that, to implement the above functions, a communication apparatus includes corresponding hardware structures and/or software modules for performing the respective functions. Those skilled in the art should readily recognize that, in combination with the algorithm steps of each example described in the embodiments of the present disclosure, the present disclosure can be implemented in the form of hardware or a combination of hardware and computer software. Whether a certain function is executed by hardware or by computer software driving hardware, depends on the specific applications and design constraints of the technical solutions. Professional technical personnel may use different methods to implement the described functions for each specific application, but such an implementation should not be considered beyond the scope of the present disclosure.

The embodiments of the present disclosure may divide the communication apparatus into functional modules according to the above method embodiments, for example, each functional module may be divided corresponding to each function, or two or more functions may be integrated into a functional module. The above integrated modules may be implemented in the form of hardware or implemented in the form of software. It should be noted that the division of modules in the embodiments of the present disclosure is schematic and is only a division of logical functions, and there may be other divisions in actual implementations. Below, it is illustrated by taking the division of each functional module corresponding to each function as an example.

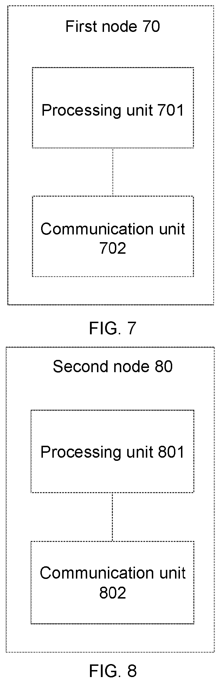

For example, taking the communication apparatus as the first node in the above method embodiments as an example, FIG. 7 is a structural schematic diagram of a first node provided in the embodiments of the present disclosure. The first node may perform the data sending method provided in the above method embodiments. As shown in FIG. 7, the first node 70 includes: a processing unit 701 and a communication unit 702.

The processing unit 701 is configured to map to-be-transmitted data to a data radio bearer (DRB).

The communication unit 702 is configured to send the to-be-transmitted data to a second node via the DRB.

In some embodiments, the processing unit 701 is configured to map the to-be-transmitted data to the DRB based on a data mapping rule.

In some embodiments, the processing unit 701 is configured to map the to-be-transmitted data directly to the DRB based on a first data mapping rule.

In some embodiments, the processing unit 701 is configured to: map the to-be-transmitted data to a quality of service flow (QoS flow) based on a second data mapping rule; and map the QoS flow to the DRB.

In some embodiments, the communication unit 702 is configured to receive a first message sent from the second node, wherein the first message is used to request establishment of a data transmission connection; and the communication unit 702 is configured to send a second message to the second node, wherein the second message is used to respond to the first message.

In some embodiments, the second message comprises a data mapping rule.

In some embodiments, the second message is a radio resource control (RRC) message or a medium access control element (MAC CE).

In some embodiments, the data mapping rule comprises at least one of:
an identifier of the data mapping rule;
a length of the data mapping rule;
indication information for indicating whether it is a default data mapping rule;
a number of packet filters;
a precedence value of the data mapping rule;
an identifier of a QoS flow associated with the data mapping rule, or an identifier of a DRB associated with the data mapping rule;
a packet filter list.

In some embodiments, the packet filter list includes at least one of:
a direction of a packet filter;
an identifier of a packet filter;
a content of the packet filter.

In some embodiments, the to-be-transmitted data comprises at least one of: data used for an artificial intelligence model, data generated by an artificial intelligence model, or sensing data.

In some embodiments, the first node 70 is a base station, and the second node is a terminal.

Taking the communication apparatus as the second node in the above method embodiments as an example, FIG. 8 is a structural schematic diagram of a second node provided in the embodiments of the present disclosure. The second node may perform the data receiving method provided in the above method embodiments. As shown in FIG. 8, the second node 80 includes: a processing unit 801 and a communication unit 802.

The communication unit 802 is configured to receive to-be-transmitted data sent from a first node on a DRB, wherein the to-be-transmitted data is mapped to the DRB by the first node.

In some embodiments, the communication unit 802 is configured to send a first message to the first node, wherein the first message is used to request establishment of a data transmission connection; and the communication unit 802 is configured to receive a second message sent from the first node, wherein the second message is used to respond to the first message.

In some embodiments, the second message includes a data mapping rule.

In some embodiments, the second message is a radio resource control (RRC) message or a medium access control element (MAC CE).

In some embodiments, the data mapping rule comprises at least one of:
an identifier of the data mapping rule;
a length of the data mapping rule;
indication information for indicating whether it is a default data mapping rule;
a number of packet filters;
a precedence value of the data mapping rule;
an identifier of a QoS flow associated with the data mapping rule, or an identifier of a DRB associated with the data mapping rule;
a packet filter list.

In some embodiments, the packet filter list includes at least one of:
a direction of a packet filter;
an identifier of a packet filter;
a content of the packet filter.

In some embodiments, the to-be-transmitted data comprises at least one of: data used for an artificial intelligence model, data generated by an artificial intelligence model, or sensing data.

In some embodiments, the first node is a base station and the second node 80 is a terminal.

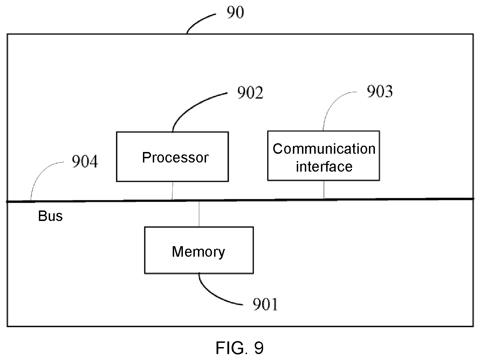

In the case of implementing the functions of the above integrated modules in the form of hardware, the embodiments of the present disclosure provide another possible structure of a communication apparatus involved in the above embodiments. As shown in FIG. 9, the communication apparatus 90 includes: a processor 902, and a bus 904. Optionally, the communication apparatus may further include a memory 901; optionally, the communication apparatus may further include a communication interface 903.

The processor 902 may implement or perform various exemplary logical blocks, modules and circuits described in conjunction with the embodiments of the present disclosure. The processor 902 may be a central processing unit, a general-purpose processor, a digital signal processor, an application specific integrated circuit, a field programmable gate array or other programmable logic devices, a transistor logic device, a hardware component or any combination thereof, which may implement or perform various exemplary logical blocks, modules and circuits described in conjunction with the embodiments of the present disclosure. The processor 902 may also be a combination that implements computing functions, for example, including a combination of one or more microprocessors, a combination of a digital signal processor (DSP) and a microprocessor, or the like.

The communication interface 903 is configured to connect with other devices via a communication network. The communication network may be an Ethernet, a radio access network, a wireless local area network (WLAN), or the like.

The memory 901 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As a possible implementation, the memory 901 may exist independently of the processor 902, and the memory 901 may be connected to the processor 902 via the bus 904 and is used for storing instructions or program codes. The processor 902, when calling and executing the instructions or program codes stored in the memory 901, is capable of implementing the data sending method provided in the embodiments of the present disclosure, or implementing the data receiving method provided in the embodiments of the present disclosure.

In another possible implementation, the memory 901 may also be integrated with the processor 902.

The bus 904 may be an extended industry standard architecture (EISA) bus or the like. Buses 904 may be divided into address buses, data buses, control buses, and the like. For the convenience of representation, only one thick line is used in FIG. 9 for representation, but it does not mean that there is only one bus or one type of bus.

Some embodiments of the present disclosure provide a computer-readable storage medium (e.g., a non-transitory computer-readable storage medium), and the computer-readable storage medium has stored computer program instructions therein that, when running on a computer, cause the computer to perform the data sending method described in any embodiment of the above embodiments, or perform the data receiving method described in any embodiment of the above embodiments.

Exemplarily, the above-mentioned computer-readable storage medium may include, but be not limited to, a magnetic storage device (e.g., a hard disk, a floppy disk or a magnetic tape, etc.), an optical disk (e.g., a compact disk (CD) or a digital versatile disk (DVD), etc.), a smart card and a flash memory device (e.g., an erasable programmable read-only memory (EPROM), a card, a stick or a key driver, etc.). The various computer-readable storage media described in the present disclosure may represent one or more devices and/or other machine-readable storage media for storing information. The term "machine-readable storage medium" may include, but be not limited to, a radio channel and various other media capable of storing, containing, and/or carrying instructions and/or data.

The embodiments of the present disclosure provide a computer program product including instructions, and the computer program product, when running on a computer, causes the computer to perform the data sending method described in any embodiment of the above embodiments, or perform the data receiving method described in any embodiment of the above embodiments.

The foregoing is only the specific implementations of the present disclosure, but the protection scope of the present disclosure is not limited thereto, and any changes or substitutions within the scope of the technologies disclosed in the present disclosure should be covered within the protection scope of the present disclosure. Therefore, the protection scope of the present disclosure should be based on the protection scope of the claims.

## Claims

1. A data sending method, applied to a first node, the method comprising:
mapping to-be-transmitted data to a data radio bearer (DRB); and
sending the to-be-transmitted data to a second node via the DRB.

2. The method according to claim 1, wherein mapping the to-be-transmitted data to the data radio bearer (DRB), comprises:
mapping the to-be-transmitted data to the DRB based on a data mapping rule.

3. The method according to claim 2, wherein mapping the to-be-transmitted data to the DRB based on the data mapping rule, comprises:
mapping the to-be-transmitted data directly to the DRB based on a first data mapping rule.

4. The method according to claim 2, wherein mapping the to-be-transmitted data to the DRB based on the data mapping rule, comprises:
mapping the to-be-transmitted data to a quality of service flow (QoS flow) based on a second data mapping rule; and
mapping the QoS flow to the DRB.

5. The method according to claim 1, wherein before sending the to-be-transmitted data to the second node via the DRB, the method further comprises:
receiving a first message sent from the second node, wherein the first message is used to request establishment of a data transmission connection;
sending a second message to the second node, wherein the second message is used to respond to the first message.

6. The method according to claim 5, wherein the second message comprises a data mapping rule.

7. The method according to claim 5, wherein the second message is a radio resource control (RRC) message or a medium access control element (MAC CE).

8. The method according to claim 2 or 6, wherein the data mapping rule comprises at least one of:
an identifier of the data mapping rule;
a length of the data mapping rule;
indication information for indicating whether it is a default data mapping rule;
a number of packet filters;
a precedence value of the data mapping rule;
an identifier of a QoS flow associated with the data mapping rule, or an identifier of a DRB associated with the data mapping rule;
a packet filter list.

9. The method according to claim 8, wherein the packet filter list comprises at least one of:
a direction of a packet filter;
an identifier of a packet filter;
a content of the packet filter.

10. The method according to claim 1, wherein the to-be-transmitted data comprises at least one of: data used for an artificial intelligence model, data generated by an artificial intelligence model, or sensing data.

11. The method according to claim 1, wherein the first node is a base station and the second node is a terminal.

12. A data receiving method, applied to a second node, the method comprising:
receiving to-be-transmitted data sent from a first node on a DRB, wherein the to-be-transmitted data is mapped to the DRB by the first node.

13. The method according to claim 12, wherein before receiving the to-be-transmitted data sent from the first node on the DRB, the method further comprises:
sending a first message to the first node, wherein the first message is used to request establishment of a data transmission connection; and
receiving a second message sent from the first node, wherein the second message is used to respond to the first message.

14. The method according to claim 13, wherein the second message comprises a data mapping rule.

15. The method according to claim 13, wherein the second message is a radio resource control (RRC) message or a medium access control element (MAC CE).

16. The method according to claim 14, wherein the data mapping rule comprises at least one of:
an identifier of the data mapping rule;
a length of the data mapping rule;
indication information for indicating whether it is a default data mapping rule;
a number of packet filters;
a precedence value of the data mapping rule;
an identifier of a QoS flow associated with the data mapping rule, or an identifier of a DRB associated with the data mapping rule;
a packet filter list.

17. The method according to claim 16, wherein the packet filter list comprises at least one of:
a direction of a packet filter;
an identifier of a packet filter;
a content of the packet filter.

18. The method according to claim 12, wherein the to-be-transmitted data comprises at least one of: data used for an artificial intelligence model, data generated by an artificial intelligence model, or sensing data.

19. The method according to claim 12, wherein the first node is a base station and the second node is a terminal.

20. A communication apparatus, comprising: a memory and a processor; wherein the memory and the processor are coupled; the memory is configured to store instructions executable by the processor; the processor, upon executing the instructions, performs the method according to any one of claims 1 to 11, or performs the method according to any one of claims 12 to 19.

21. A computer-readable storage medium, wherein the computer-readable storage medium has stored computer instructions, and when the computer instructions run on a computer, the computer is enabled to perform the method according to any one of claims 1 to 11, or perform the method according to any one of claims 12 to 19.
